# EUROPÄISCHE PATENTANMELDUNG

(11) **EP 4 840 734 A1**
(43) Veröffentlichungstag der Anmeldung: **18.11.2026**
(21) Anmeldenummer: 26169482.2
(22) Anmeldetag: 31.03.2026
(51) Int. Cl.: B62J 1/16, B62J 1/20, B62J 1/28, B62J 17/08, B62J 17/083

(54) **WETTERSCHUTZEINRICHTUNG UND FAHRRADKINDERSITZ**

(30) Priorität: 14.05.2025 DE 102025118662
(71) Anmelder: Costoiu, Cristian, 80335 München (DE)
(72) Erfinder: Costoiu, Cristian, 80335 München (DE)
(74) Vertreter: Schober, Mirko

(57) **Zusammenfassung**

Eine Wetterschutzeinrichtung (3) für Fahrradkindersitze (2), umfasst einen Trägerabschnitt (5), welcher an einem Fahrradkindersitz (2) anbindbar oder angebunden ist, und einen Dachabschnitt (8), welcher am Trägerabschnitt (5) so gelagert ist, dass er relativ zum Trägerabschnitt (5) aus einer Verstaulage in eine Gebrauchslage verlagerbar, insbesondere verschwenkbar und/oder verschiebbar ist.

## Beschreibung

Die Erfindung betrifft eine Wetterschutzeinrichtung sowie einen Fahrradkindersitz.

Oftmals werden kleinere Kinder in Fahrradkindersitzen transportiert. Die Fahrradkindersitze werden in der Regel im hinteren Teil eines Fahrrades beispielsweise am Gepäckträger und/oder den Verstrebungen montiert. Auch wenn es sich dabei in der Regel um Schalensitze handelt, die bis zum Kopf des Kindes reichen und das Kind schützen, so ist das Fahrrad und damit auch der Kindersitz und das darin sitzende Kind natürlich immer äußeren Witterungsbedingungen ausgesetzt. Starker Sonnenschein aber auch Niederschläge können den Sitzkomfort beeinträchtigen, was bis zu gesundheitlichen Schäden für das Kind führen kann.

Am Markt sind Lösungen bekannt, bei denen ähnlich wie bei einem Zelt eine Schutzfolie auf ein Gestänge gespannt und am Kindersitz befestigt wird. Eine solche Lösung ist in der Regel umständlich zu installieren, da verschiedenste Handgriffe nötig sind, um eine entsprechende Schutzfolie zu spannen und am Kindersitz sicher zu befestigen. Zudem gibt es bei dieser Vorgehensweise nur die Möglichkeit, den Kindersitz komplett mit der Schutzfolie zu umgeben.

Diese Lösungen eignen sich daher ausschließlich als Regenschutz, nicht aber als Sonnenschutz. Separate Sonnenschutzelemente sind ebenfalls bekannt, diese werden am oberen Ende des Kindersitzes installiert. Letztere eignen sich allerdings schon aufgrund des Fahrtwindes nicht als Regenschutz.

Aufgabe der vorliegenden Erfindung ist es daher, eine Wetterschutzeinrichtung anzugeben, die die Unzulänglichkeiten des Standes der Technik beseitigt und insbesondere sowohl als Sonnenschutzeinrichtung als auch als Regenschutzeinrichtung verwendbar ist. Darüber hinaus soll auch für die hinreichende Stabilität der Vorrichtung gesorgt werden.

Gelöst wird diese Aufgabe durch eine Wetterschutzeinrichtung mit den Merkmalen des Anspruchs 1 sowie einen Fahrradkindersitz mit den Merkmalen des Anspruchs 8. Vorteilhafte Ausführungsformen finden sich in den Unteransprüchen.

Die vorliegende Erfindung geht von dem Gedanken aus, dass eine Wetterschutzeinrichtung am Fahrradkindersitz vorhanden ist. Entweder ist die Wetterschutzeinrichtung zumindest teilweise in den Fahrradkindersitz integriert oder daran befestigt. Dazu umfasst die erfindungsgemäße Wetterschutzeinrichtung für Fahrradkindersitze einen Trägerabschnitt, welcher an einem Fahrradkindersitz anbindbar oder angebunden ist sowie einen Dachabschnitt, welcher am Trägerabschnitt so gelagert ist, dass er relativ zum Trägerabschnitt aus einer Verstaulage in eine Gebrauchslage verlagerbar, insbesondere verschwenkbar und/oder verschiebbar, ist.

Auf diese Weise entfällt zunächst einmal ein aufwändiges Installieren einer solchen Wetterschutzeinrichtung, da diese sich vor Gebrauch bereits in einer Verstaulage am Fahrradkindersitz befindet. Diese kann dann durch eine einfache Bewegung, das kann eine Schwenkbewegung und/oder eine Verschiebebewegung sein, in die Gebrauchslage überführt werden. In dieser Gebrauchslage befindet sich dann bereits der Dachabschnitt in einer etwa horizontalen Ausrichtung, sodass der Kopf des Sitzinsassen nach oben hin gegenüber Sonneneinstrahlung bereits geschützt ist. Eine solche Wetterschutzeinrichtung ist sogar ampeltauglich, da sie sich mit wenigen Handgriffen, beispielsweise durch Lösen einer Arretierung, aus der Verstaulage in die Gebrauchslage überführen lässt.

Nach einer bevorzugten Ausführungsform der vorliegenden Erfindung ist in dem Dachabschnitt eine Schutzplane integriert. Diese Schutzplane ist grundsätzlich in der Lage, den gesamten Kindersitz abzudecken. Dabei kann die Schutzplane teilweise transparent ausgebildet sein, um die Sicht des Kindes zu ermöglichen, aber auch eventuell den unverklärten Blick auf weitere Installationen am Fahrzeugkindersitz zu ermöglichen, beispielsweise Rücklichter.

Nach einer besonders bevorzugten Ausführungsform ist vorgesehen, dass der Dachabschnitt eine Tasche aufweist, in der eine bevorzugt teilweise transparente Schutzplane untergebracht ist. Die Schutzplane ist bevorzugt wasserdicht oder zumindest wasserfest ausgebildet und ist weiterhin bevorzugt Teil der Tasche oder mit dieser verbunden. Auf diese Weise wird auch gewährleistet, dass die Schutzplane nicht verloren gehen kann, beispielsweise wenn eine Windböe diese beim Installieren erfassen sollte.

Befindet sich der Dachabschnitt in der Gebrauchsstellung, kann die Schutzplane aus der Tasche herausgezogen und über den Dachabschnitt und den Kindersitz gestülpt werden.

In einer bevorzugten Ausführungsform ist vorgesehen, dass der Dachabschnitt über einen Hebel mit dem Trägerabschnitt gekoppelt ist, wobei der Hebel über ein erstes Gelenk mit dem Dachabschnitt und über ein zweites Gelenk mit dem Trägerabschnitt verbunden ist.

Der Hebel kann zusammen mit dem Dachabschnitt und dem Trägerabschnitt eine kinematische Koppelanordnung bilden, insbesondere eine Zwei- oder Mehrgelenkanordnung, durch welche der Dachabschnitt entlang einer vorgegebenen Bewegungsbahn zwischen der Verstaulage und der Gebrauchslage geführt ist.

Insbesondere kann vorgesehen sein, dass die Verlagerung des Dachabschnitts durch eine Betätigung des Hebels erfolgt, wobei diese Verlagerung zumindest abschnittsweise selbsttätig oder selbstführend erfolgt.

Weiterhin kann vorgesehen sein, dass die Überführung des Dachabschnitts von der Verstaulage in die Gebrauchslage durch eine einzige Betätigungsbewegung eines Benutzers erfolgt, ohne dass zusätzliche manuelle Eingriffe erforderlich sind.

Durch die geführte Verlagerung des Dachabschnitts kann eine einfache und reproduzierbare Überführung zwischen Verstaulage und Gebrauchslage erreicht werden. Insbesondere wird eine einfache Bedienbarkeit ermöglicht, die eine Betätigung auch während kurzer Standzeiten, beispielsweise an einer Ampel, erlaubt.

Alternativ oder zusätzlich zu der beschriebenen Hebelanordnung kann die Verlagerung des Dachabschnitts durch andere kinematische Mechanismen erfolgen, beispielsweise durch eine Viergelenkanordnung, eine Parallelogrammkinematik, eine Schub-/Schwenkkombination oder andere geeignete Mechanismen zur geführten Bewegung.

In einer bevorzugten Ausführungsform bildet der Dachabschnitt eine erste Schutzstufe zum Schutz vor Sonneneinstrahlung, während eine im Dachabschnitt angeordnete Schutzplane eine zweite Schutzstufe bildet, die insbesondere dazu ausgebildet ist, den Fahrradkindersitz zumindest teilweise oder vollständig gegenüber Niederschlag zu schützen.

Die Schutzplane ist vorzugsweise dauerhaft mit dem Dachabschnitt verbunden, insbesondere in einer Tasche aufgenommen, sodass ein integriertes Wetterschutzsystem bereitgestellt wird.

Die Wetterschutzeinrichtung kann unterschiedliche Betriebszustände aufweisen, insbesondere:
- einen ersten Betriebszustand, in welchem sich der Dachabschnitt in der Gebrauchslage befindet und als Sonnenschutz dient, und
- einen zweiten Betriebszustand, in welchem zusätzlich die Schutzplane aus dem Dachabschnitt herausgezogen ist und einen erweiterten Wetterschutz bereitstellt.

Es gibt unterschiedliche Möglichkeiten, den Dachabschnitt aus der Verstaulage in die Gebrauchslage zu befördern. Eine bevorzugte Ausführungsform sieht vor, dass der Dachabschnitt über einen Hebel mit dem Trägerabschnitt über Gelenke verbunden ist. Dies erlaubt einen einfachen Schwenkvorgang, um den Dachabschnitt aus der Verstaulage in die Gebrauchslage zu überführen. Insgesamt ist diese Ausbildung auch selbstführend, d. h., der Benutzer braucht lediglich eine Schwenkbewegung auszuführen, damit der Dachabschnitt in die Gebrauchslage gelangt. Dabei kann vorgesehen sein, dass wenigstens eine Arretiereinrichtung vorhanden ist. Diese Arretiereinrichtung dient dazu, die relative Schwenklage zwischen dem Hebel und dem Dachabschnitt oder/und dem Trägerabschnitt, insbesondere in der Gebrauchslage der Wetterschutzeinrichtung zu fixieren.

Ferner kann eine Arretiereinrichtung auch dafür sorgen, dass bei Nichtgebrauch die Wetterschutzeinrichtung in der Gebrauchslage gehalten wird. Beispielsweise kann eine solche Arretiereinrichtung lediglich einen Hebel oder Kippmechanismus enthalten, dessen Betätigung ermöglicht, dass die Wetterschutzeinrichtung von der Verstaulage in die Gebrauchslage überführt werden kann. Dies kann auf unterschiedliche Weise erreicht werden, beispielsweise durch einen Rastmechanismus mit einem Hebel oder einem Druckknopf, um den Rastmechanismus zu lösen. Auch kann an dieser Stelle eine Vorspannung vorgesehen sein, die dann die Überführung der Wetterschutzeinrichtung von der Verstaulage in die Gebrauchslage unterstützt.

Befindet sich der Dachabschnitt in der Gebrauchslage, dient er bereits als Sonnenschutz. Andererseits kann eine größere beschattete Fläche für den Sonnenschutz erforderlich sein. Zu diesem Zweck sieht eine weitere Ausführungsform der vorliegenden Erfindung vor, dass am Dachabschnitt ein Aufnahmeabschnitt, insbesondere ein Aufnahmeschlitz, angeordnet ist, in welchen ein Schirm einsteckbar oder eingesteckt ist. Mit einem solchen Schirm kann die Fläche, die an der Dachabschnitt im Hinblick auf eingestreute Sonnenstrahlung überdeckt, noch vergrößert werden. Ein solcher Schirm kann praktischerweise in zusammengefalteter Form im Bereich der Wetterschutzeinrichtung in der Verstaulage untergebracht werden, beispielsweise, indem man diesen in der oben beschriebenen Tasche verwahrt. Natürlich kann man einen solchen Schirm auch außerhalb der Tasche lagern.

Zudem bietet die erfindungsgemäße Wetterschutzeinrichtung weitere Vorteile. Beispielsweise kann an der Wetterschutzeinrichtung auch eine Beleuchtung vorgesehen sein. Diese dient dazu, dass der Kindersitz aufgewertet wird, indem er beispielsweise ein Rücklicht oder auch Blinklichter enthält. Wichtig ist an dieser Stelle zu erwähnen, dass bei den meisten Kindersitzen eine erfindungsgemäße Wetterschutzeinrichtung nachgerüstet werden kann, sodass es auch möglich ist, Beleuchtungseinrichtungen im Nachhinein zusätzlich zusammen mit der Wetterschutzeinrichtung zu installieren.

Nach einer bevorzugten Ausführungsform kann/können beispielsweise am Trägerabschnitt wenigstens ein Beleuchtungsmittel, bevorzugt eine Rückleuchte und/oder Blinklichter angeordnet sein. Insbesondere dann, wenn die Schutzfolie transparent ausgebildet ist, sind Beleuchtungsmittel auch bei installierter Schutzfolie nach hinten hin sichtbar. Auch kann vorgesehen sein, dass es bei der erfindungsgemäßen Wetterschutzeinrichtung eine Bedienungseinrichtung gibt, die das wenigstens eine Beleuchtungsmittel ein- und ausschaltet. Auf diese Weise kann der Fahrradfahrer bei Bedarf entsprechende Beleuchtungsmittel ein- oder ausschalten. Praktischerweise kann vorgesehen sein, dass die Bedienungseinrichtung über ein Befestigungsmittel verfügt, das es beispielsweise erlaubt, eine solche Bedienungseinrichtung zum Beispiel am Fahrradlenker anzubinden. Bevorzugt erlaubt die Bedienungseinrichtung eine drahtlose Kommunikation mit den Beleuchtungsmitteln, sodass eine aufwändige Kabelführung vermieden wird. Natürlich ist es möglich, das System autark zu gestalten, wobei dann an der erfindungsgemäßen Wetterschutzeinrichtung eine Spannungsquelle, beispielsweise einer Batterie, vorgesehen ist. Auf der anderen Seite ist es natürlich auch möglich, beispielsweise bei der Verwendung bei einem E-Bike, die ohnehin vorhandene Spannungsversorgung dann auch mit der erfindungsgemäßen Wetterschutzeinrichtung und den daran installierten Beleuchtungsmitteln zu verbinden. Entsprechend kann auch die Bedienungseinrichtung über eine solche Spannungsquelle mit Spannung versorgt werden. Möglich ist natürlich auch, dass die Bedienungseinrichtung selbst über eine Spannungsquelle, beispielsweise Batterie, verfügt.

Die Erfindung betrifft zudem einen Fahrradkindersitz mit einer Rückenlehne, wobei im Bereich von deren Kopfende der Trägerabschnitt der oben beschriebenen Wetterschutzeinrichtung befestigt oder ausgebildet ist. Der Fahrradkindersitz weist also eine erfindungsgemäße Wetterschutzeinrichtung auf.

Die Erfindung wird nachfolgend anhand der Zeichnungen in den Figuren 1-6 näher erläutert.
- Figur 1 -: zeigt einen Ausschnitt eines Fahrrades mit erfindungsgemäßem Kindersitz mit einer erfindungsgemäßen Wetterschutzeinrichtung in der Verstaulage in perspektivischer Ansicht.
- Figur 2 -: zeigt eine Ausschnittvergrößerung des Details A aus Figur 1.
- Figur 3 -: zeigt eine erfindungsgemäße Wetterschutzeinrichtung in perspektivischer Ansicht in der Gebrauchslage in einer ersten Konfiguration.
- Figur 4 -: zeigt eine erfindungsgemäße Wetterschutzeinrichtung in perspektivischer Ansicht in der Gebrauchslage in einer zweiten Konfiguration.
- Figur 5 -: zeigt eine erfindungsgemäße Wetterschutzeinrichtung an einem Fahrradkindersitz in perspektivischer Ansicht in der Gebrauchslage in einer dritten Konfiguration.
- Figur 6 -: zeigt eine perspektivische Ansicht einer erfindungsgemäßen Bedienungseinrichtung.

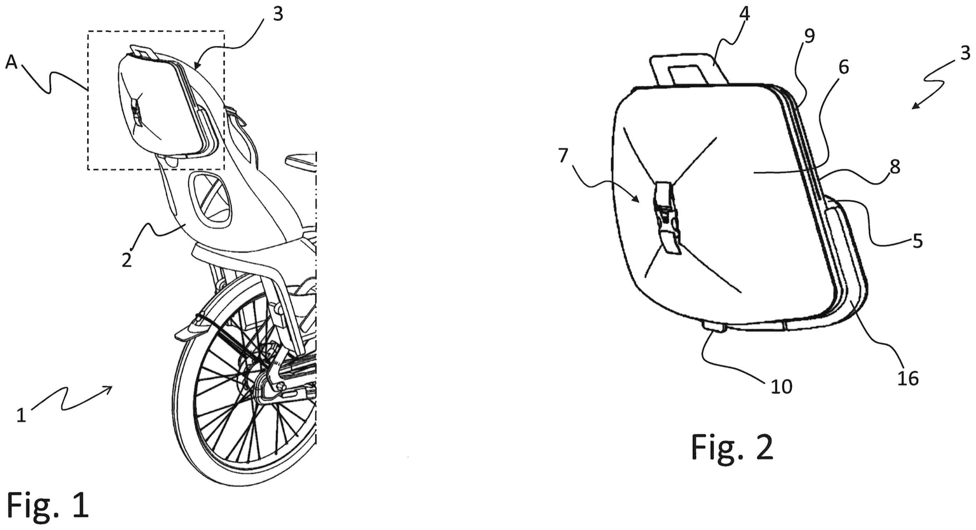

Wie in Figur 1 dargestellt, kann die erfindungsgemäße Wetterschutzeinrichtung 3 am Kindersitz 2 eines Fahrrades 1 installiert werden. Der Kindersitz 2 ist üblicherweise auf dem Gepäckträger eines Fahrrades 1 montiert. Natürlich gibt es auch noch andere Montagemöglichkeiten.

Details der Wetterschutzeinrichtung 3 (A aus Figur 1) sind in Figur 2 genauer dargestellt.

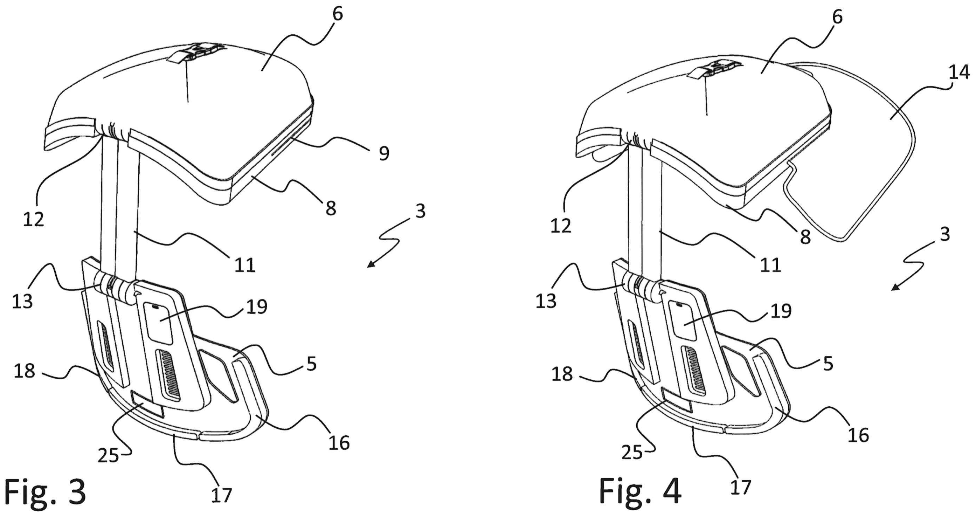

Die erfindungsgemäße Wetterschutzeinrichtung weist bevorzugt einen Trägerabschnitt 5 auf, an welchem ein Dachabschnitt 8 hier in der Verstaulage angebunden ist. Der Trägerabschnitt 5 kann ein separates Bauteil sein, kann aber auch Teil eines Kindersitz 2 (vergleiche Figur 1) sein. Optional können Beleuchtungsmittel, hier beispielsweise mit 16 bezeichnet, am Trägerabschnitt 5 angeordnet sein. Auf der dem Trägerabschnitt 5 in der Verstaulage abgewandten Seite ist eine Tasche 6 angeordnet, die beispielsweise über ein Verschlusselement 7 geöffnet und geschlossen werden kann. Optional kann auch ein Schlitz 9 vorgesehen sein, in welchem sich ein Schirm 14 (vergleiche Figur 4) unterbringen lässt, wenn sich der Dachabschnitt 8 in der Gebrauchslage befindet. Weiter optional kann die gesamte Wetterschutzeinrichtung 3 beispielsweise über einen Tragegriff 4 verfügen. Dies eignet sich insbesondere dann, wenn die Wetterschutzeinrichtung 3 am Kindersitz 2 nachgerüstet werden kann. Die Bewegung des Dachabschnitts 8 erfolgt vorzugsweise derart, dass dieser aus einer an den Trägerabschnitt 5 angelegten Verstaulage in eine im Wesentlichen oberhalb des Kindersitzes 2 angeordnete Gebrauchslage überführt wird.

In den Figuren 3-5 ist die erfindungsgemäße Wetterschutzeinrichtung 3 dargestellt. Dabei ist der Dachabschnitt 8 aus den in Figuren 1 und 2 dargestellten Verstaulage in eine Gebrauchslage überführt. Die Überführung von der in Figur 1 dargestellten Verstaulage in die in den Figuren 3 bis 5 dargestellte Gebrauchslage erfolgt durch eine Betätigung des Hebels 11, wobei der Dachabschnitt 8 entlang einer vorgegebenen Bewegungsbahn verschwenkt wird. Die Bewegung ist dabei derart geführt, dass der Dachabschnitt 8 ohne zusätzliche manuelle Ausrichtung in die Gebrauchslage überführt wird.

Im dargestellten Beispiel dient dazu ein Hebel 11, der das Verschwenken des Dachabschnitts 8 gegenüber dem Trägerabschnitt 5 bewirkt. Hierzu ist der Hebel 11 mit dem Dachabschnitt 8 über das Gelenk 12 und mit dem Trägerabschnitt 5 über das Gelenk 13 verbunden. Der Hebel 11 bildet zusammen mit dem Dachabschnitt 8 und dem Trägerabschnitt 5 eine kinematische Anordnung, durch welche der Dachabschnitt 8 entlang einer vorgegebenen Bewegungsbahn zwischen der Verstaulage und der Gebrauchslage geführt ist.

Insbesondere bewirkt eine Betätigung des Hebels 11 eine geführte Verlagerung des Dachabschnitts 8, wobei diese Verlagerung zumindest abschnittsweise selbsttätig erfolgt.

Das Gelenk 12 liegt in der Verstaulage etwa im Bereich 25 am Trägerabschnitt 5 an. Die Gelenke 12, 13 können Arretiereinrichtungen (nicht gezeigt) aufweisen, die die Fixierung des Hebels 11 relativ zum Trägerabschnitt 5 bzw. zum Dachabschnitt 8 in einer vorgegebenen Schwenklage ermöglichen. Eine axiale Verzahnung kann beispielsweise dazu dienen, dass der Hebel 11 gegenüber dem Trägerabschnitt 5 bzw. dem Dachabschnitt 8 nicht mehr verschwenkt werden kann. In der in Figur 3 dargestellten Gebrauchslage erkennt man zudem optionale Beleuchtungsmittel 16, 17, 18, die beispielsweise als Rücklicht (17) oder als Blinklichter rechts und links (16, 18) dienen können. Die Spannungsversorgung der Beleuchtungsmittel 16-18 kann beispielsweise bei E-Bikes über die Bordelektrik erfolgen. Natürlich kann die erfindungsgemäße Wetterschutzeinrichtung 3 auch über eine eigene Spannungsquelle verfügen. 19 bezeichnet insofern ein Batteriefach, welches optional vorhanden sein und für die Spannungsversorgung sorgen kann. Die Überführung der Wetterschutzeinrichtung 3 in die Gebrauchslage kann auf unterschiedliche Weise erfolgen. Die im gezeigten Beispiel als Hebelkonstruktion dargestellte Konzeption kann natürlich auch durch andere Verlagerungsbewegungen, beispielsweise Verschieben und/oder Schwenken oder andere kombinierte Bewegungen ermöglicht werden.

In Figur 4 ist zusätzlich ein Schirm 14 in der Gebrauchslage der Wetterschutzeinrichtung 3 an dem Schlitz 9 fixiert. Es wird an dieser Stelle darauf hingewiesen, dass die Verbindung zwischen Schirm 14 und Dachabschnitt 8 auch auf andere Weise erfolgen kann. Der Schirm 14 erweitert die durch den Dachabschnitt 8 bereitgestellte Schutzfläche, wobei der Dachabschnitt 8 gleichzeitig als Trägerstruktur für den Schirm dient.

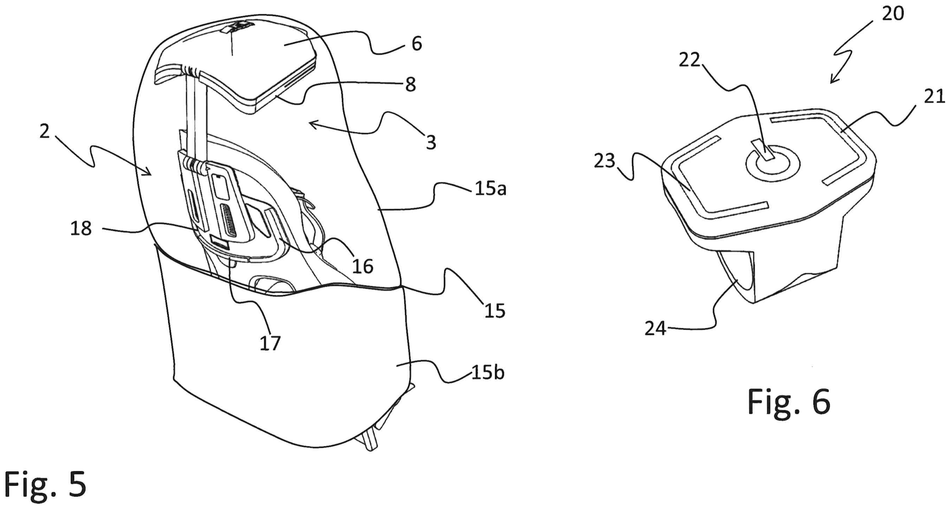

Bei der Ausführung von Figur 5 ist eine Schutzfolie 15 über den gesamten Kindersitz 2 gestülpt. Diese Schutzfolie 15 befindet sich in der Verstaulage in der Tasche 6, die über den Verschluss 7 (vergleiche Figur 2) geöffnet werden kann. Aus der Position, die in Figur 3 dargestellt ist, kann die in Figur 5 dargestellte Position dadurch erreicht werden, dass die Tasche 6 geöffnet und die in der Tasche befindliche Schutzfolie 15 herausgezogen wird. Diese kann dann auf einfache Weise über den Dachabschnitt 8 und den Kindersitz 2 gestülpt werden, sodass sich die in Figur 5 dargestellte Situation einstellt. Der Dachabschnitt 8 und die Schutzfolie 15 bilden gemeinsam ein mehrstufiges Wetterschutzsystem, wobei der Dachabschnitt (8) einen ersten Schutz gegenüber Sonneneinstrahlung bereitstellt und die Schutzplane 15 einen erweiterten Schutz gegenüber Niederschlag ermöglicht. Die Schutzfolie 15 ist üblicherweise aus einem bekannten wetterfesten Material ausgebildet, so ist sie bevorzugt zumindest wasserabweisend oder wasserdicht. Im Hinblick auf die Beleuchtungsmittel 16-18 ist es vorteilhaft, wenn die Schutzfolie zumindest einen Abschnitt 15a aufweist, der transparent ausgebildet ist, sodass er einerseits die Möglichkeit bietet, dass sich das in dem Kindersitz 2 sitzende Kind umsehen kann, und zum anderen, dass auf der rückwärtigen Seite die Beleuchtungsmittel 16-18 nach hinten sichtbar abstrahlen können. So kann ein weiterer Teil oder können mehrere Teile 15b der Schutzfolie 15 opak ausgebildet sein, hier bietet sich beispielsweise, wie in Figur 5 dargestellt, der untere Bereich unterhalb der Beleuchtungsmittel 16-18 an.

Für erhöhten Komfort kann eine Bedienungseinrichtung 20 vorgesehen sein, die in Figur 6 dargestellt ist. Diese Bedienungseinrichtung dient dazu, die Beleuchtungsmittel 16-18 einzuschalten und/oder zu steuern. Sie kann beispielsweise über einen Befestigungsabschnitt 24 an der Lenkstange des Fahrrades befestigt werden. Bevorzugt umfasst die Bedienungseinrichtung 20 einen Schalter 22 zum Ein-/Ausschalten und/oder zum Ein-/Ausschalten des Rücklichts 17. Weiter können Schalter 21, 23 an der Bedienungseinrichtung 20 vorgesehen sein, die beispielsweise selektiv dazu dienen, die Blinklichter 16 (für Rechtsabbiegen) bzw. 18 (für Linksabbiegen) durch den Fahrer des Fahrrades ermöglichen. Die Bedienungseinrichtung 20 ermöglicht eine Steuerung der Beleuchtungsmittel unabhängig von der Stellung des Dachabschnitts 8 und der Schutzfolie 15, sodass die Sichtbarkeit der Beleuchtungsmittel in allen Betriebszuständen gewährleistet ist.

Die vorstehend beschriebenen Merkmale und Ausführungsformen können einzeln oder in beliebiger Kombination miteinander verwirklicht werden, sofern sich aus dem technischen Zusammenhang nichts anderes ergibt.

Mit der erfindungsgemäßen Wetterschutzeinrichtung lässt sich ein Wetterschutz für einen Kindersitz auf einfache Weise herstellen, insbesondere lässt sich dies auch sehr einfach über eine simple Mechanik bewerkstelligen, die insbesondere auch über Ampeltauglichkeit verfügt. Zusätzliche Einrichtungen wie beispielsweise die Beleuchtungsmittel 16-18 und die Bedienungseinrichtung 20 schaffen einen erheblichen Mehrwert. Außerdem kann die Wetterschutzeinrichtung 3 als separates Bauteil bei bestehenden Kindersitzen nachgerüstet werden.

## Patentansprüche

1. Wetterschutzeinrichtung (3) für Fahrradkindersitze (2), umfassend:
einen Trägerabschnitt (5), welcher an einem Fahrradkindersitz (2) anbindbar oder angebunden ist,
einen Dachabschnitt (8), welcher am Trägerabschnitt (5) so gelagert ist, dass er relativ zum Trägerabschnitt (5) aus einer Verstaulage in eine Gebrauchslage verlagerbar, insbesondere verschwenkbar und/oder verschiebbar ist.

2. Wetterschutzeinrichtung (3) nach Anspruch 1,
**dadurch gekennzeichnet,**
**dass** der Dachabschnitt (8) eine Tasche (6) aufweist, in der eine bevorzugt teilweise transparente Schutzplane (15) untergebracht ist, wobei die Schutzplane (15) bevorzugt Teil der Tasche (6) oder mit dieser verbunden ist.

3. Wetterschutzeinrichtung (3) nach Anspruch 1 oder 2,
**dadurch gekennzeichnet,**
**dass** der Dachabschnitt (8) über einen Hebel (11) mit dem Trägerabschnitt (5) über Gelenke (12, 13) verbunden ist.

4. Wetterschutzeinrichtung (3) nach einem der vorigen Ansprüche,
**dadurch gekennzeichnet,**
**dass** der Dachabschnitt (8) über einen einzelnen Hebel (11) mit dem Trägerabschnitt (5) verbunden ist, wobei der Hebel (11) über ein erstes Gelenk (12) mit dem Dachabschnitt (8) und über ein zweites Gelenk (13) mit dem Trägerabschnitt (5) verbunden ist, derart, dass durch eine Betätigung des Hebels (11) eine geführte Verlagerung des Dachabschnitts (8) aus der Verstaulage in die Gebrauchslage erfolgt.

5. Wetterschutzeinrichtung (3) nach einem der vorigen Ansprüche,
**dadurch gekennzeichnet,**
**dass** wenigstens eine Arretiereinrichtung (10) vorhanden ist, um die relative Schwenklage zwischen dem Hebel (11) und dem Dachabschnitt (8) oder/und dem Trägerabschnitt (5), insbesondere in der Gebrauchslage der Wetterschutzeinrichtung, zu fixieren.

6. Wetterschutzeinrichtung (3) nach einem der vorigen Ansprüche,
**dadurch gekennzeichnet,**
**dass** am Dachabschnitt (8) ein Aufnahmeabschnitt (9), insbesondere ein Aufnahmeschlitz angeordnet ist, in welchen ein Schirm (14) einsteckbar oder eingesteckt ist.

7. Wetterschutzeinrichtung (3) nach einem der vorigen Ansprüche,
**dadurch gekennzeichnet,**
**dass** am Trägerabschnitt (5) wenigstens ein Beleuchtungsmittel (16-18), bevorzugt eine Rückleuchte (17) und/oder Blinklichter (16, 18) angeordnet ist/sind.

8. Wetterschutzeinrichtung (3) nach einem der vorigen Ansprüche,
**dadurch gekennzeichnet,**
**dass** sie weiter eine Bedienungseinrichtung aufweist, die das wenigstens eine Beleuchtungsmittel (16-18) ein- und ausschaltet.

9. Fahrradkindersitz (2) mit einer Rückenlehne, wobei im Bereich von deren Kopfende der Trägerabschnitt (5) der Wetterschutzeinrichtung (3) nach einem der vorigen Ansprüche befestigt oder ausgebildet ist.

## Geänderte Patentansprüche

### Geänderte Patentansprüche gemäss Regel 137(2) EPÜ.

1. Wetterschutzeinrichtung (3) für Fahrradkindersitze (2), umfassend:
einen Trägerabschnitt (5), welcher an einem Fahrradkindersitz (2) anbindbar oder angebunden ist,
einen Dachabschnitt (8), welcher am Trägerabschnitt (5) so gelagert ist, dass er relativ zum Trägerabschnitt (5) aus einer Verstaulage in eine Gebrauchslage verlagerbar, insbesondere verschwenkbar und/oder verschiebbar ist,
**dadurch gekennzeichnet,**
**dass** der Dachabschnitt (8) über einen einzelnen Hebel (11) mit dem Trägerabschnitt (5) verbunden ist, wobei der Hebel (11) über ein erstes Gelenk (12) mit dem Dachabschnitt (8) und über ein zweites Gelenk (13) mit dem Trägerabschnitt (5) verbunden ist, derart, dass durch eine Betätigung des Hebels (11) eine geführte Verlagerung des Dachabschnitts (8) aus der Verstaulage in die Gebrauchslage erfolgt.

2. Wetterschutzeinrichtung (3) nach Anspruch 1,
**dadurch gekennzeichnet,**
**dass** der Dachabschnitt (8) eine Tasche (6) aufweist, in der eine bevorzugt teilweise transparente Schutzplane (15) untergebracht ist, wobei die Schutzplane (15) bevorzugt Teil der Tasche (6) oder mit dieser verbunden ist.

3. Wetterschutzeinrichtung (3) nach Anspruch 1 oder 2,
**dadurch gekennzeichnet,**
**dass** der Dachabschnitt (8) über einen Hebel (11) mit dem Trägerabschnitt (5) über Gelenke (12, 13) verbunden ist.

4. Wetterschutzeinrichtung (3) nach einem der vorigen Ansprüche,
**dadurch gekennzeichnet,**
**dass** wenigstens eine Arretiereinrichtung (10) vorhanden ist, um die relative Schwenklage zwischen dem Hebel (11) und dem Dachabschnitt (8) oder/und dem Trägerabschnitt (5), insbesondere in der Gebrauchslage der Wetterschutzeinrichtung, zu fixieren.

5. Wetterschutzeinrichtung (3) nach einem der vorigen Ansprüche,
**dadurch gekennzeichnet,**
**dass** am Dachabschnitt (8) ein Aufnahmeabschnitt (9), insbesondere ein Aufnahmeschlitz angeordnet ist, in welchen ein Schirm (14) einsteckbar oder eingesteckt ist.

6. Wetterschutzeinrichtung (3) nach einem der vorigen Ansprüche,
**dadurch gekennzeichnet,**
**dass** am Trägerabschnitt (5) wenigstens ein Beleuchtungsmittel (16-18), bevorzugt eine Rückleuchte (17) und/oder Blinklichter (16, 18) angeordnet ist/sind.

7. Wetterschutzeinrichtung (3) nach einem der vorigen Ansprüche,
**dadurch gekennzeichnet,**
**dass** sie weiter eine Bedienungseinrichtung aufweist, die das wenigstens eine Beleuchtungsmittel (16-18) ein- und ausschaltet.

8. Fahrradkindersitz (2) mit einer Rückenlehne, wobei im Bereich von deren Kopfende der Trägerabschnitt (5) der Wetterschutzeinrichtung (3) nach einem der vorigen Ansprüche befestigt oder ausgebildet ist.
